# EUROPÄISCHE PATENTSCHRIFT

(11) **EP 1 985 557 B1**
(45) Veröffentlichungstag und Bekanntmachung des Hinweises auf die Patenterteilung: **12.05.2010**
(21) Anmeldenummer: 08004126.2
(22) Anmeldetag: 06.03.2008
(51) Int. Cl.: B65G 27/02

(54) **Vorrichtung zur Förderung und Entstaubung von Tabletten oder ähnlichen Presslingen aus einer Tablettenpresse**
Device for moving and removal of dust from tablets or similar moulds from a tablet compactor
Dispositif de transport et de dépoussiérage de comprimés ou de pièces pressées analogues provenant d'une presse à comprimés

(30) Priorität: 04.04.2007 DE 102007016225
(43) Veröffentlichungstag der Anmeldung: 29.10.2008
(73) Patentinhaber: Fette GmbH, 21493 Schwarzenbek (DE)
(72) Erfinder: Römer, Harald, 21465 Reinbek (DE)
(74) Vertreter: Hauck Patent- und Rechtsanwälte

(56) Entgegenhaltungen:
- BE-A- 520 346
- DE-A1-102005 062 715
- DE-U1- 9 406 712
- GB-A- 668 179
- GB-A- 760 818
- US-A- 4 299 323
- US-A1- 2006 054 465

## Beschreibung

Die Erfindung bezieht sich auf eine Vorrichtung zur Förderung und Entstaubung von Tabletten oder ähnlichen Preßlingen aus einer Tablettenpresse nach dem Oberbegriff des Patentanspruchs 1.

Aus DE 94 06 712 U1 ist eine Vorrichtung zum Entgraten und Entstauben von Tabletten bekannt geworden. Die aus einem Ablauf einer Tablettenpresse kommenden Tabletten werden mit Hilfe eines Höhenförderers in Form einer Förderwendel zu einem Zyklon gefördert, in dem eine Entstaubung stattfindet. Von dem Zyklon gelangen die entstaubten und entgrateten Tabletten in einen Aufnahmebehälter. Die Fläche der Wendel ist aufgerauht, so daß die Tabletten nach oben gefördert werden.

In der DE 10 2005 062715 wird eine Höhenfördervorrichtung beschrieben, bei der eine Schneckenwendel um einen zentralen Pfosten herumgeführt ist und die einen unteren Zulauf und einen oberen Ablauf aufweist. Auch hier dient die Schneckenwendel zum Entgraten und Entstauben. Die Schoeckenfördervorrichtung ist in Schwingungen versetzbar.

Aus BE 520 346A ist bekannt geworden, eine Vibrations-Förderschnecke mit zwei Schneckengängen auszuführen. Eine ähnliche Vorrichtung ist in der GB 760819 A offenbart.

Aus US-A-4,299,323 ist eine Speicher- und Fördereinheit bekannt, die zwei schraubenlinienförmige Führungen für Werkzeuge aufweist, wobei die Führungen gegenüber der Vertikalen leicht geneigt sind. Aus US 2006/054465 A1 ist ein Vibrationsförderer bekannt geworden, der zwei konzentrische schraubenlinienförmige Decks aufweist, die betriebsmäßig miteinander gekoppelt sind.

Der Erfindung liegt die Aufgabe zugrunde, derartige Förder- und Entstaubungsmittel so auszuführen, daß die Produktionsmenge deutlich erhöht werden kann.

Diese Aufgabe wird durch die Merkmale des Patentanspruchs 1 gelöst.

Bei der erfmdungsgemäßen Vorrichtung weist die Förderschnecke mindestens zwei Schneckengänge auf, denen jeweils ein Zulauf und ein Ablauf zugeordnet ist. Mit Hilfe einer derartigen Vorrichtung können zum Beispiel zwei Abläufe einer Doppelrundlaufpresse bedient werden, um die abgegebenen Tabletten zu entgraten, zu entstauben und zu einem Aufnahmebehälter zu transportieren.

Es ist bekannt, die Tabletten vor dem Verpacken auf metallische Bestandteile zu untersuchen. Daher sieht eine Ausgestaltung der Erfindung vor, daß die Abläufe der Förderschnecke mit parallelen Förderkanälen verbunden sind, die parallel durch einen Metalldetektor geführt sind.

Die Erfindung wird nachfolgend anhand von Zeichnungen näher erläutert.
- Fig. 1: zeigt in Seitenansicht schematisch eine Förderschnecke nach der Erfindung.
- Fig. 2: zeigt eine Draufsicht auf die Förderschnecke nach Fig. 1.
- Fig. 3: zeigt die Verbindung der Förderschnecke nach den Figuren 1 und 2 mit einem Metalldetektor.

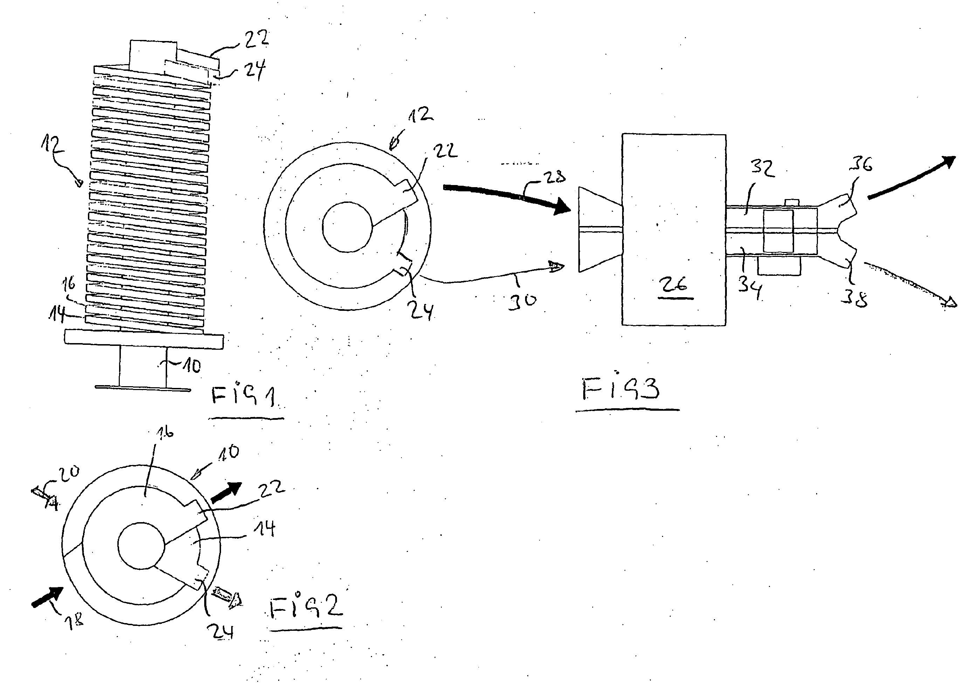

In Fig. 1 ist ein vertikaler Pfosten 10 zu erkennen, um den herum sich eine Schnecke 12 wendelt mit zwei Schneckengängen 14, 16. Der Pfosten 10 steht auf einer nicht gezeigten Vibrationsvorrichtung, mit der die Schnecke 12 in Schwingungen versetzbar ist. Die Schneckengänge 14, 16 sind rinnenartig ausgebildet. Durch die Vibration kann in den Rinnen aufgenommenes Gut (Preßlinge aus einer Rundläuferpresse) nach oben gefördert werden. Im vorliegenden Fall sollen dies Tabletten sein. Die Zufuhr zu den Schneckengängen 14, 16 erfolgt bei 18 bzw. 20 in Fig. 2. Die Zuläufe 18, 20 sind mit einer nicht gezeigten Rundläuferpresse in Verbindung, welche zwei Abläufe aufweist. Mithin ist jeweils ein Ablauf mit einem Zulauf 18, 20 der Schnecke 12 verbunden.

Die Schneckengänge 14, 16 enden am oberen Ende der Schnecke 12 in Rinnenabschnitten 22 bzw. 24, welche die Abläufe bilden.

In Fig. 3 ist gezeigt, wie ein derartiger Schneckenförderer 12 einem Metalldetektor 26 vorgeordnet ist. Über Rinnenabschnitte werden die Abläufe 22, 24 mit zugeordneten Eingängen des Metalldetektors 26 verbunden, wie durch die Pfeile 28, 30 angedeutet. Durch den Metalldetektor 26 erstrecken sich parallel Förderrinnen 32, 34, wobei der Metalldetektor 26 die Tabletten auf metallische Bestandteile untersucht. Die Rinnen 32, 34 gehen zu Abläufen 36, 38, von denen aus nicht gezeigte Aufnahmebehälter gefüllt werden.

## Patentansprüche

1. Vorrichtung zur Förderung und Entstaubung von Tabletten oder ähnlichen Preßlingen aus einer Tablettenpresse, mit einer vertikal angeordneten Vibrations-Förderschnecke, die einen unteren Zulauf und einen oberen Ablauf und eine Förderschnecke (12) mit mindestens zwei Schneckengängen (14, 16) denen jeweils ein Zulauf (18, 20) und ein Ablauf (22, 24) zugeordnet sind aufweist, and eine Tablettenpresse **dadurch gekennzeichnet, daß** die Tablettenpresse zwei mit Ablaufkanälen verbundene Abläufe hat, und die Ablaufkanäle mit den Zuläufen (18, 20) des Schneckenförderers (12) verbunden sind.

2. Vorrichtung nach Anspruch 1, **dadurch gekennzeichnet, daß** die oberen Abläufe (22, 24) Rinnenabschnitte aufweisen.

3. Vorrichtung nach Anspruch 1 oder 2, **dadurch gekennzeichnet, daß** die Abläufe (22, 24) des Schneckenförderers mit parallelen Förderkanälen (32, 34) verbunden sind, die parallel durch einen Metalldetektor (26) geführt sind.

## Claims

1. An apparatus for conveying and dedusting of tablets or like pellets from a tablet press, with a vertically arranged vibration-screw conveyor, which has a lower inlet and an upper outlet and a screw conveyor (12) having at least two screw channels (14, 16), to which, in each case, an inlet (18, 20) and an outlet (22, 24) are assigned, and a tablet press, **characterized in that** the tablet press has two outlets which are connected via outlet channels and the outlet channels are connected to the inlets (18, 20) of the screw conveyor (12).

2. The apparatus according to Claim 1, **characterized in that** the upper outlets (22, 24) have groove sections.

3. The apparatus according to Claim 1 or 2, **characterized in that** the outlets (22, 24) of the screw conveyor are connected to parallel conveyor channels (32, 34), which are led in parallel through a metal detector (26).

## Revendications

1. Dispositif de transport et de dépoussiérage de comprimés ou de pièces pressées analogues provenant d'une presse à comprimés, avec hélice transporteuse à vibration verticalement disposée qui a une alimentation inférieure et un écoulement supérieur et une hélice transporteuse (12) avec au moins deux spires (14, 16), une alimentation (18, 20) et un écoulement (22, 24) étant associé à chacune de celles-ci et avec une presse à comprimés, **caractérisé en ce que** la presse à comprimés a deux écoulements raccordés à des conduites de décharge et les conduites de décharge sont raccordées avec les alimentations (18, 20) de la hélice transporteuse (12).

2. Dispositif selon la revendication 1, **caractérisé en ce que** les écoulements supérieurs (22, 24) ont des sections à rainure.

3. Dispositif selon la revendication 1 ou 2, **caractérisé en ce que** les écoulements (22, 24) de la hélice transporteuse sont raccordées avec des conduites de transport parallèles (32, 34) qui sont guidés en parallèle à travers d'un détecteur de métaux (26).
